# EUROPEAN PATENT APPLICATION

(11) **EP 4 425 839 A1**
(43) Date of publication of application: **04.09.2024**
(21) Application number: 22948260.9
(22) Date of filing: 28.06.2022
(51) Int. Cl.: H04L 12/00

(54) **PACKET PROCESSING**

(71) Applicant: New H3C Technologies Co., Ltd., Hangzhou, Zhejiang 310052 (CN)
(72) Inventor: LI, Hao, Beijing 100102 (CN)
(74) Representative: IPAZ
(86) International application number: PCT/CN2022/101722
(87) International publication number: WO 2024/000137

(57) **Abstract**

The present disclosure provides packet processing and relates to the technical field of communication. The solution of the present disclosure includes: receiving a first packet; forwarding a second packet, the second packet comprises a first segment routing header SRH and the first packet, and the first SRH comprises marking information, and the marking information indicates encapsulation basis of the first SRH. In this way, the intermediate node can accurately acquire the original packet.

## Description

### Technical field

The present disclosure relates to the technical field of communications, and in particular to packet processing.

### Background

In the Segment Routing Internet Protocol Version 6 (SRv6) network, traffic engineering may be realized by an SRv6 Policy. After receiving an original service packet, a head node of SRv6 network may encapsulate a segment routing header (SRH) in an outer layer of the service packet based on the SRv6 Policy. The SRH includes a Segment List, which includes a forwarding path of the service packet in the SRv6 network, and then nodes in the SRv6 network may forward the encapsulated service packet based on the forwarding path.

A segment list of SRH may include a binding segment identifier (BSID) of other endpoint nodes. After the endpoint node in SRv6 network receives a service packet encapsulated with SRH, if it is determined that a destination address of the service packet is its own BSID, it will encapsulate an IPv6 header and an SRH for the service packet, and then forward the service packet according to the forwarding path indicated by SRH encapsulated this time.

In some scenarios, intermediate nodes in SRv6 network need to obtain an original packet encapsulated in the service packet. In the case that the service packet has multiple layers of SRHs and IPv6 headers, the intermediate nodes cannot determine how many layers of SRHs and IPv6 headers are removed to recover the original packet, resulting in the intermediate nodes being unable to accurately obtain the original packet.

### Summary

he examples of the present disclosure aim for packet processing, so that the intermediate nodes may accurately obtain the original packet. The specific technical solutions are as follows.

AIn a first aspect, an example of the present disclosure provides a packet processing method, which is applied to a first network device and includes:
receiving a first packet;
forwarding a second packet, the second packet includes a first segment routing header SRH and the first packet, and the first SRH includes marking information, and the marking information indicates encapsulation basis of the first SRH.

In a possible implementation, the marking information takes a value of a first value or a second value;
when the value of the marking information is the first value, it is indicated that the first SRH is an SRH encapsulated by a BSID;
when the value of the marking information is the second value, it is indicated that the first SRH is not an SRH encapsulated by a BSID.

In a possible implementation, before forwarding the second packet, the method further comprises:
if a destination address of the first packet is a locally configured binding segment identifier BSID, encapsulating an IPv6 header and a first SRH in an outer layer of the first packet to obtain the second packet, wherein the first SRH includes marking information, and the marking information takes a value of the first value; or,
if a next hop of a routing table entry matched by the first packet is an SRv6 Policy, encapsulating the IPv6 header and the first SRH in the outer layer of the first packet to obtain the second packet, wherein the first SRH includes marking information, and the marking information takes a value of the second value.

In a possible implementation, the first SRH includes a flags field, and 1 bit in the flags field carries the marking information.

In a possible implementation, the method further comprises:
receiving a third packet sent by a second network device, the third packet includes at least one layer of SRH and IPv6 header, and an SRH in each layer includes marking information;
identifying marking information included in an SRH layer-by-layer from an SRH in the outermost layer until a second SRH whose marking information is a second value is identified, and determining that a subsequent part of the second SRH in the third packet is an original packet.

In a possible implementation, the first network device is connected with a service function node; after determining that the subsequent part of the second SRH in the third packet is the original packet, the method further comprises:
if a destination address of an IPv6 header in the outermost layer of the third packet is a locally configured static proxy SID or a dynamic proxy SID, forwarding the original packet to the service function node; or,
if the destination address of the IPv6 header in the outermost layer of the third packet is a locally configured masquerading proxy SID, updating the destination address of the IPv6 header in the outermost layer to an address of a last network device of a forwarding path indicated by the second SRH to obtain a fourth packet, and forwarding the fourth packet to the service function node.

In a possible implementation, after forwarding the fourth packet to the service function node, the method further comprises:
receiving a fifth packet sent by the service function node;
updating a destination address of an IPv6 header in the outermost layer of the fifth packet to an address of a next network device in a forwarding path indicated by the SRH in the outermost layer, to obtain a sixth packet;
forwarding the sixth packet in the forwarding path indicated by the SRH in the outermost layer.

In a possible implementation, if the destination address of the IPv6 header in the outermost layer of the third packet is a locally configured masquerading proxy SID, the method further comprises:
exchanging a source address of the IPv6 header in the outermost layer of the third packet with a source address included in the IPv6 header in a same layer as the second SRH;
after receiving the fifth packet sent by the service function node, the method further comprises:
   exchanging a source address of the IPv6 header in the outermost layer of the fifth packet with a source address included in the IPv6 header in a same layer as the second SRH.

In a possible implementation, the third packet is a traceroute packet; after determining that the subsequent part of the second SRH in the third packet is the original packet, the method further comprises:
sending a lifetime TTL timeout packet to the second network device, a destination address of the TTL timeout packet is a source address of the IPv6 header in a same layer as the second SRH.

In a second aspect, the example of the present disclosure provides a packet processing apparatus, which is applied to a first network device, and the apparatus comprises:
a receiving module to receive a first packet;
a forwarding module to forward a second packet, wherein the second packet comprises a first segment routing header SRH and the first packet, and the first SRH includes marking information, and the marking information indicates encapsulation basis of the first SRH.

In a possible implementation, the marking information takes a value of a first value or a second value;
when the value of the marking information is the first value, it is indicated that the first SRH is an SRH encapsulated by a BSID;
when the value of the marking information is the second value, it is indicated that the first SRH is not an SRH encapsulated by a BSID.

In a possible implementation, the apparatus further comprises an encapsulation module;
the encapsulation module to encapsulate an IPv6 header and a first SRH in an outer layer of the first packet to obtain the second packet if the destination address of the first packet is a locally configured binding segment identifier BSID, the first SRH includes marking information, and the marking information takes a value of the first value; or,
the encapsulation module to encapsulate the IPv6 header and the first SRH in the outer layer of the first packet to obtain the second packet if a next hop of a routing table entry matched by the first packet is an SRv6 Policy, the first SRH includes marking information, and the marking information takes a value of the second value.

In a possible implementation, the first SRH includes a flags field, and 1 bit in the flags field carries the marking information.

In a possible implementation, the apparatus further comprises a determining module;
the receiving module is further to receive a third packet sent by a second network device, the third packet includes at least one layer of SRH and IPv6 header, and an SRH in each layer includes marking information;
the determining module is to identify the marking information included in an SRH layer-by-layer from an SRH in the outermost layer until a second SRH whose marking information is a second value is identified, and determine that a subsequent part of the second SRH in the third packet is an original packet.

In a possible implementation, the first network device is connected with a service function node; the forwarding module is further to:
if a destination address of an IPv6 header in the outermost layer of the third packet is a locally configured static proxy SID or a dynamic proxy SID, forward the original packet to the service function node; or,
if the destination address of the IPv6 header in the outermost layer of the third packet is a locally configured masquerading proxy SID, update the destination address of the IPv6 header in the outermost layer to an address of a last network device of a forwarding path indicated by the second SRH to obtain a fourth packet, and forward the fourth packet to the service function node.

In a possible implementation,
the receiving module is to receive a fifth packet sent by the service function node;
the forwarding module is further to:
   update a destination address of an IPv6 header in the outermost layer of the fifth packet to an address of a next network device in a forwarding path indicated by the SRH in the outermost layer, to obtain a sixth packet;
   forward the sixth packet in the forwarding path indicated by the SRH in the outermost layer.

In a possible implementation, the forwarding module is further to:
exchanging a source address of the IPv6 header in the outermost layer of the third packet with a source address included in the IPv6 header in a same layer as the second SRH;
exchanging a source address of the IPv6 header in the outermost layer of the fifth packet with a source address included in the IPv6 header in a same layer as the second SRH.

In a possible implementation,
the forwarding module is further to send a lifetime TTL timeout packet to the second network device, a destination address of the TTL timeout packet is a source address of the IPv6 header in a same layer as the second SRH.

In a third aspect, an example of the present disclosure provides a network device, which includes:
a processor;
a transceiver;
a machine-readable storage medium storing machine executable instructions that can be executed by the processor; the machine executable instructions cause the processor to perform the following steps:
   receiving a first packet through the transceiver;
   forwarding a second packet through the transceiver, the second packet includes a first segment routing header SRH and the first packet, and the first SRH comprises marking information, and the marking information indicates encapsulation basis of the first SRH.

In a possible implementation, the marking information takes a value of a first value or a second value;
when the value of the marking information is the first value, it is indicated that the first SRH is an SRH encapsulated by a BSID;
when the value of the marking information is the second value, it is indicated that the first SRH is not an SRH encapsulated by a BSID.

In a possible implementation, the machine executable instructions further cause the processor to perform the following steps:
if a destination address of the first packet is a locally configured binding segment identifier BSID, encapsulating an IPv6 header and a first SRH in an outer layer of the first packet to obtain the second packet, the first SRH includes marking information, and the marking information takes a value of the first value; or,
if a next hop of a routing table entry matched by the first packet is an SRv6 Policy, encapsulating the IPv6 header and the first SRH in the outer layer of the first packet to obtain the second packet, the first SRH includes marking information, and the marking information takes a value of the second value.

In a possible implementation, the first SRH includes a flags field, and 1 bit in the flags field carries the marking information.

In a possible implementation, the machine executable instructions further cause the processor to perform the following steps:
receiving a third packet sent by a second network device through the transceiver, the third packet comprises at least one layer of SRH and IPv6 header, and an SRH in each layer comprises marking information;
identifying the marking information included in an SRH layer-by-layer from an SRH in the outermost layer until a second SRH whose marking information is a second value is identified, and determining that a subsequent part of the second SRH in the third packet is an original packet.

In a possible implementation, the machine executable instructions further cause the processor to perform the following steps:
if a destination address of an IPv6 header in the outermost layer of the third packet is a locally configured static proxy SID or a dynamic proxy SID, forwarding the original packet to the service function node through the transceiver; or,
if the destination address of the IPv6 header in the outermost layer of the third packet is a locally configured masquerading proxy SID, updating the destination address of the IPv6 header in the outermost layer to an address of a last network device of a forwarding path indicated by the second SRH to obtain a fourth packet, and forwarding the fourth packet to the service function node through the transceiver.

In a possible implementation, the machine executable instructions further cause the processor to perform the following steps:
receiving a fifth packet sent by the service function node through the transceiver;
updating a destination address of an IPv6 header in the outermost layer of the fifth packet to an address of a next network device in a forwarding path indicated by the SRH in the outermost layer, to obtain a sixth packet;
forwarding the sixth packet in the forwarding path indicated by the SRH in the outermost layer through the transceiver.

In a possible implementation, the machine executable instructions further cause the processor to perform the following steps:
exchanging a source address of the IPv6 header in the outermost layer of the third packet with a source address included in the IPv6 header in a same layer as the second SRH;
exchanging a source address of the IPv6 header in the outermost layer of the fifth packet with a source address included in the IPv6 header in a same layer as the second SRH.

In a possible implementation, the third packet is a traceroute packet; the machine executable instructions further cause the processor to perform the following steps:
sending a lifetime TTL timeout packet to the second network device through the transceiver, a destination address of the TTL timeout packet is a source address of an IPv6 header in a same layer as the second SRH.

In a fourth aspect, an example of the present disclosure provides a machine-readable storage medium storing machine executable instructions that, when invoked and executed by a processor, cause the processor to implement the method steps described in the first aspect above.

In a fifth aspect, an example of the present disclosure provides a computer program product that causes the processor to implement the method steps described in the first aspect above.

According to the packet processing method provided by the example of the present disclosure, after receiving a first packet, the first network device forwards a second packet including a first SRH and the first packet. Since marking information included in the first SRH indicates encapsulation basis of the first SRH, the intermediate node that received the second packet may distinguish the SRH encapsulated by a BSID according to the marking information in the SRH, so that the original packet encapsulated in the second packet can be accurately obtained.

### Brief Description of the Drawings

In order to illustrate the technical solutions of the examples of the present disclosure and the prior art more clearly, the following briefly introduces the drawings required in the examples and the prior art. Obviously, the drawings in the following description are only some examples of the present disclosure, and for those of ordinary skill in the art, other examples may be obtained according to these drawings without any creative effort.
FIG. 1 is a schematic diagram of a scenario with a combination of a service chain function and SRv6 according to an example of the present disclosure;
FIG. 2 is a schematic diagram of a packet cross-domain forwarding according to an example of the present disclosure;
FIG. 3 is another schematic diagram of another packet cross-domain forwarding according to an example of the present disclosure;
FIG. 4 is a schematic flowchart of a packet processing method according to an example of the present disclosure;
FIG. 5 is a schematic diagram of a first SRH according to an example of the present disclosure;
FIG. 6 is an exemplary schematic diagram of a Flags field according to an example of the present disclosure;
FIG. 7 is a schematic diagram of a packet encapsulation according to an example of the present disclosure;
FIG. 8 is a schematic flowchart of another packet processing method according to an example of the present disclosure;
FIG. 9 is a schematic diagram of a packet destination address update and source address exchange according to an example of the present disclosure;
FIG. 10 is a schematic structural diagram of a packet processing apparatus according to according to an example of the present disclosure;
FIG. 11 is a schematic structural diagram of a network device according to an example of the present disclosure.

### Detailed Description

In order to make the purpose, technical solutions and advantages of the present clearer, the present disclosure will be further explained in detail with reference to the attached drawings and examples. Obviously, the described examples are only part of the examples of the present disclosure, but not all of them. Based on the examples in the present disclosure, all other examples obtained by those of ordinary skilled in the art without creative work fall within the scope of protection in the present disclosure.

For the convenience of description, the following related concepts related to the examples of the present disclosure are explained.

SRv6 is a source routing technology. The head node of an SRv6 network may add SRH encapsulation to a traffic, and guide the traffic to be forwarded according to a specified path through an Segment List in the SRH header.

A service chain function refers that in the process of traffic forwarding, a service function forwarder (SFF) node sends the traffic to a service function (SF) node according to a planned sequence, so that the SF node processes traffic, the SF node may specifically realize charging function, firewall function, etc.

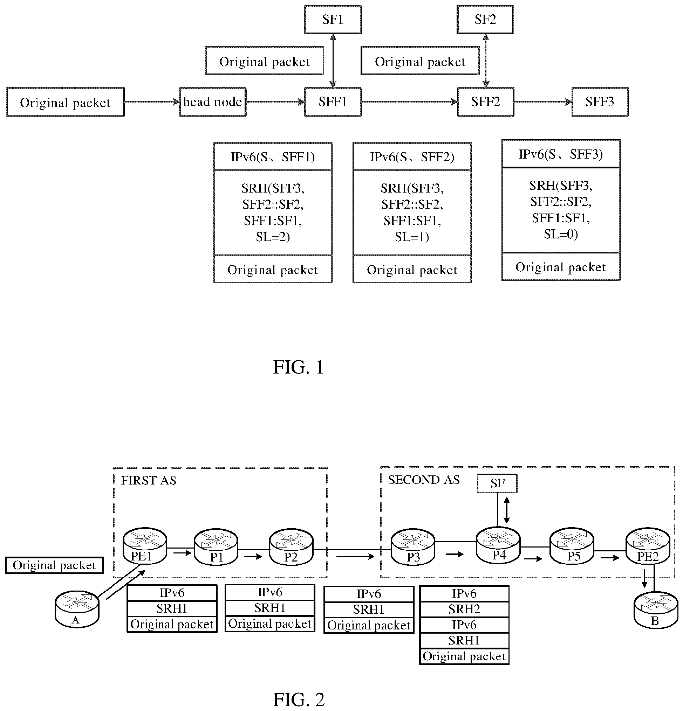

At present, the service chain function may be combined with SRv6, that is, the service chain function may be realized in SRv6 network, and the service chain may be arranged through the Segment List of SRv6. As shown in FIG. 1, after receiving the Original Packet (Original Packet), a head node (namely a Classifier in the service chain function scenario) encapsulates an internet protocol version 6 (IPv6) header and an SRH in an outer layer of the original packet.

The source address of the IPv6 header is a source address of an original service packet, and the destination address is SFF1.

Segment List included in SRH is SFF1::SF1, SFF2::SF2, SFF3.
Wherein, SFF1::SF1 is an Segment ID (SID) of SFF1, and the type of which may be End.AD, End.AS or End.AM, and is used to guide SF1 to send the packets to SF1;
SFF2:: SF2 is the SID of SFF2, and the type of which may be End.AD, End.AS or End.AM, and is used to guide SFF2 to send the packets to SF2;
SFF3 is the SID of SFF3, and the type of which may be a common End type.

The head node may forward the packet encapsulating the IPv6 header and SRH to SFF1. If the type of SFF1 is End.AD or End.AS, SFF1 may forward the original packet to SF1. After processesing the original packet, SF1 sends the processed original packet to SFF1, and then SFF1 re-encapsulates the IPv6 header and SRH for the processed original packet and sends it to SFF2. The processing of packet by SFF2 is similar to that of SFF1, which will not be repeated here.

The above-mentioned End.AD is an SRv6 SID, which is used to indicate that the node to which the End.AD belongs acts as an SR proxy (Segment Routing Proxy). Before forwarding the packet to the SF node for processing, the IPv6 header and SRH of the packet are temporarily deleted and then forwarded to the SF node. After receiving the packet processed by the SF node, the IPv6 header and SRH is re-encapsulated for the packet based on information of the IPv6 header and SRH cached in a dynamic cache. That is to say, the node to which End.AD belongs may be used as a dynamic proxy node to maintain a dynamic cache for each service chain in the dynamic cache.

End.AS is another SRv6 SID, which is used to indicate that the node to which End.AS belongs acts as an SR proxy, and may achieve similar packet processing functions as End.AD. The difference between End.AS and End.AD is that the node to which End.AS belongs re-encapsulates the IPv6 header and SRH for the packet through static configuration information, which does not need to maintain dynamic cache.

End.AM is yet another SRv6 SID, which is used to indicate that the SFF node to which End.AM belongs acts as an SR proxy, and may connect the SF node with the ability to recognize SRH. Before forwarding the packet to the SF node, the SFF node to which End.AM belongs will update a destination address of the packet to the segment with SL=0, that is, a final destination address of the packet. After processing the packet, the SF node will return the processed packet to the SFF node based on the destination address, and then the SFF node will update the destination address of the packet to the segment indicated by a current SL in SRH, so that the packet will continue to be forwarded along a path indicated by the Segment List.

In practical applications, the service chain path may be connected by a binding SID (BSID). For example, in the following, two scenarios are given for connecting service chain paths through the BSID, namely a cross-domain scenario and a metropolitan area network scenario.

FIG. 2 is a schematic diagram of a packet cross-domain forwarding according to an example of the present disclosure. As shown in FIG. 2, device A is going to send a service packet to device B, and the forwarding path of the service packet crosses a first AS (Autonomous System) and a second AS. Wherein, the first AS includes PE1, P1 and P2, and the second AS includes P3, P4, P5 and PE2, P4 is connected with SF.

After receiving an Original Packet (Original Packet) from device A, PE1 needs to encapsulate an IPv6 header and an SRH1 in an outer layer of the original packet, wherein an SID list included in the SRH1 is: P1.SID, P2.SID, P3.SID, PE2.SID, wherein P3.SID is BSID.

After receiving a service packet, P3 determines that a destination address of the service packet is P3.SID, which is a locally configured BSID, and then P3 needs to re-encapsulate one IPv6 header and SRH2 for the service packet according to a path associated with the BSID; wherein the SID list included in the SRH2 is P4.SID and P5.SID.

When P4 receives a service packet, the outer layer of the original packet encapsulates two IPv6 headers and two layers of SRHs. If the SID type of P4 is End.AD or End.AS, P4 needs to remove both two layers of SRHs and the IPv6 headers, and send the original packet to SF. However, thd P4 node cannot determine how many layers of SRHs and IPv6 headers are encapsulated in the outer layer of the received service packet, so it cannot accurately remove the SRHs and IPv6 headers, resulting in that the P4 node cannot accurately obtain the Original Packet (Original Packet).

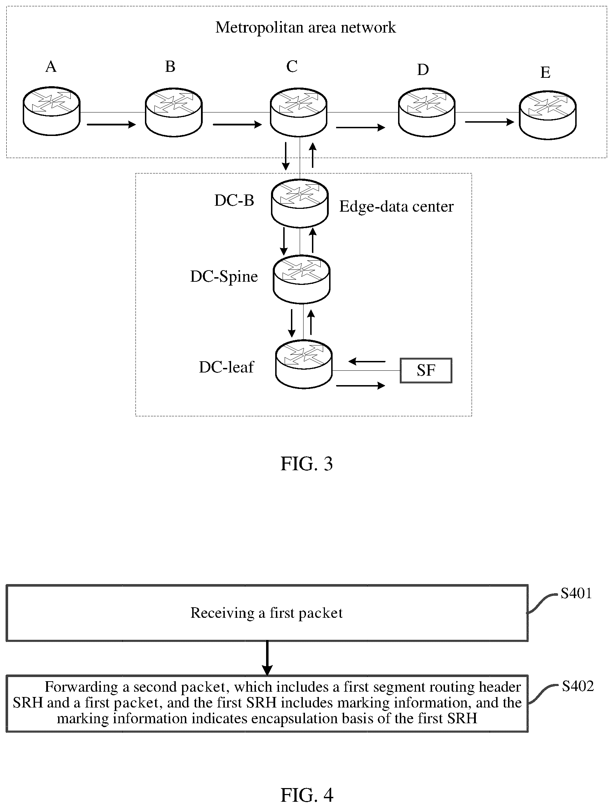

In a metropolitan area network scenario, the metropolitan area network is connected to an edge-data center (Edge-DC), and the service function node SF is deployed in the edge DC. The traffic forwarded in the metropolitan area network needs to be guided to the inside of the edge DC and after processed by the SF node inside the edge DC, it can continue to be forwarded in the metropolitan area network. As shown in FIG. 3, which is a schematic diagram of a packet forwarded in the metropolitan area network according to an example of the present disclosure, the packet sent from network device A to network device E needs to be processed by SF in the edge DC, and the whole forwarding path is arranged by SRv6 Policy. The service chain path based on SRv6 is deployed inside the edge DC, and a BSID is created in a DC-B (Data Center -boarder) to be associated with the service chain path. The traffic of the metropolitan area network enters the edge DC through the BSID of DC-B.

Specifically, when the DC-B receives the packet sent by device C, the DC-B encapsulates the SRH in the outer layer of the packet according to the path associated with the BSID, and then forwards it to DC-Spine, and then forwards it to DC-leaf by DC-Spine. As an SFF node, DC-leaf needs to forward the received packet to the SF node. However, DC-leaf cannot identify how many layers of SRHs are encapsulated in the received packet, so it cannot accurately restore the original packet and send the original packet to the SF node.

In addition, in the case that the SID of the SFF node is End.AM type, the SFF node needs to update the destination address of the packet to segment with SL=0, which is a final destination address of the packet transmitted in the SRv6 network. However, due to the existence of multi-layer encapsulation, the segment with SL=0 in the SRH in the outermost layer is not the final destination address of the packet transmitted in the SRv6 network. The final destination address is encapsulated in the SRH of an inner layer, and the SFF node cannot identify which layer of SRH is encapsulated with the final destination address, resulting in that the destination address of the packet cannot be updated accurately.

Optionally, a service function node may also be deployed in the forwarding path as an endpoint node, that is, the service function node is one node in the forwarding path indicated by the Segment List. For a service function node deployed on a SRv6 forwarding path, when the service function node receives the packet encapsulated with multiple layers of SRHs in the outer layer, the service function node cannot extract the original packet across multiple layers of SRHs.

For example, it is assumed that an intermediate node P5 in the second AS in FIG. 2 is taken as a serving function node, and P4 forwards the packet including two layers of SRHs to P5, and at this time P5 cannot recognize the original packet in the packet.

In the above two scenarios, a head node may detect a three-layer device on the path indicated by the SRv6 Policy through a traceroute function. Taking FIG. 2 as an example, PEI may send an original traceroute packet. If the original traceroute packet is forwarded to P3, P3 will encapsulate a layer of SRH and IPv6 header for the original traceroute packet, the source address of the IPv6 header is the address of P3, and the IPv6 header will inherit the Hoplimit of the IPv6 header of the original traceroute packet. In this way, as intermediate nodes in the second AS, P4 and P5 may also detect whether the Hoplimit is illegal after receiving the traceroute packet, and reply an ICMPv6 packet in the case that the Hoplimit is determined to be illegal. However, the destination address of the ICMPv6 packet generated by the intermediate node is the source address of the traceroute packet received by the intermediate node, that is, the address of P3, resulting that the ICMPv6 packet cannot be sent to the head node PE1 that initiated a traceroute operation.

In addition, in other scenarios, the intermediate node of the SRv6 network need to monitor the traffic through packet monitoring tools and analyze the traffic. Since the outer layer of the packet encapsulates multiple layers of SRHs and IPv6 headers, the original payload included in the packet cannot be quickly extracted.

In order to solve the problem that the original packet cannot be identified from the packet with multiple layers of SRHs encapsulation, the example of the present disclosure provides a packet processing method, which is applied to the first network device. As shown in FIG. 4, the method includes the following blocks.

At S401, receiving a first packet.

Wherein, the first packet may be any packet that may be transmitted in the SRv6 network in which a service chain is deployed, such as a service packet, a BFD packet or a traceroute packet.

At S402, forwarding a second packet, which includes a first segment routing header SRH and a first packet, and the first SRH includes marking information, and the marking information indicates encapsulation basis of the first SRH.

With this method, after receiving the first packet, the first network device forwards a second packet including the first SRH and the first packet. Since the marking information included in the first SRH indicates encapsulation basis of the first SRH, so that the node which has received the second packet may distinguish how the SRH is encapsulated according to the encapsulation basis indicated by the marking information, and then even though the second packet includes multiple layers of SRHs, the node which has received the second packet may accurately obtain the original packet encapsulated in the second packet based on the encapsulation basis of an SRH in each layer.

In the example of the present disclosure, the encapsulation basis may include encapsulation through BSID and encapsulation not through BSID. Accordingly, the marking information takes a value of a first value or a second value.

For example, the first value may be 1 and the second value may be 0.

When the marking information takes a value of the first value, it is indicated that the first SRH is an SRH encapsulated by a BSID.

When the marking information takes a value of the second value, it is indicated that the first SRH is not an SRH encapsulated by a BSID.

Optionally, the first SRH includes a flags field, and 1 bit in the flags field carries marking information.

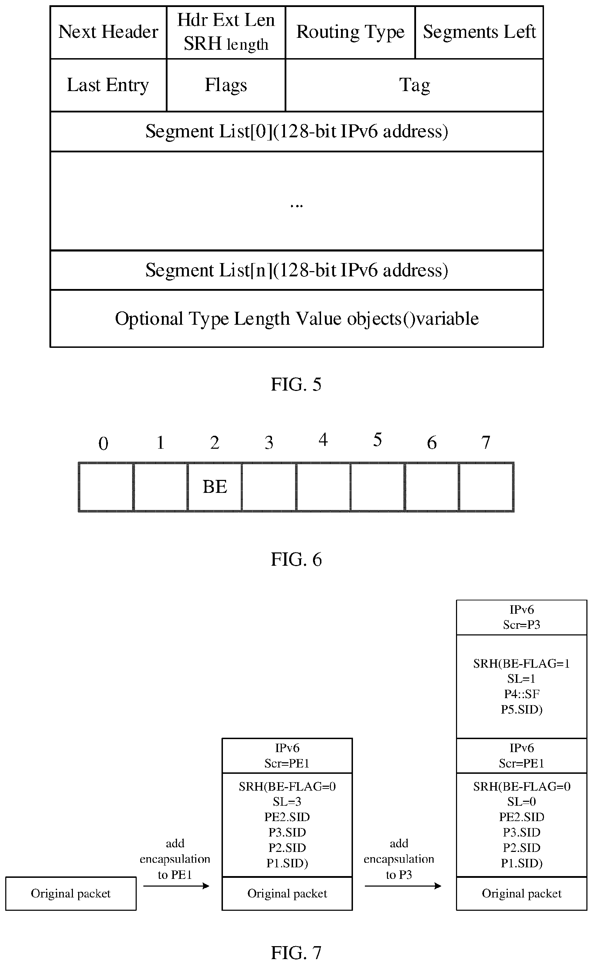

For example, as shown in FIG. 5, which is a schematic diagram of SRH structure according to an example of the present disclosure, the SRH includes the following fields.

Next Header, 8bits in length, which is used to identify the type of the next header.

SRH length (Hdr Ext Len), 8bits in length, which indicates the length of the SRH header in 8 bytes, excluding the first 8 bytes.

Routing Type, 8bits in length, the value is 4, which indicates that SRH is carried.

Segments Left (SL), 8bits in length, which is a serial number of the next segment list to be processed.

The Last Entry, 8bits in length, which takes the value of a serial number of the first SID of the actual forwarding path of the packet in the SRH header.

Flags, 8bits in length, which is flags information.

Tag, 16bits in length, which is used to mark a group of packets with the same characteristics.

Segment List, which is a SID list, and is arranged according to the order of nodes on the packet forwarding path from far to near, that is, Segment List [0] indicates a last SID of the path, Segment List [1] indicates a penultimate SID of the path, and so on. Each SID may be a 128-bit IPv6 address. The SRv6 packet is forwarded sequentially according to the IPv6 address of the Segments List, wherein Segments List[0] indicates the address of the last network device on the forwarding path.

Optional type length value objects () variable, which is an optional type length value object variable.

FIG. 5 shows an uncompressed complete SID. In the example of the present disclosure, the Segment List may also carry a compressed SID.

As shown in FIG. 6, FIG. 6 is an exemplary schematic diagram of the Flags field in FIG. 5. As an example, the example of the present disclosure may occupy the third bit in the Flags field to carry marking information, the marking information may specifically be a binding SID encapsulation flag (BE Flag).

Optionally, if BE Flag is set, that is, BE Flag takes the value of 1, it indicates that the first SRH is an SRH encapsulated by a BSID; if BE Flag is not set, that is, BE Flag takes the value of is 0, it indicates that the first SRH is not an SRH encapsulated by a BSID.

In an example of the present disclosure, on the basis of the example corresponding to FIG. 4, before forwarding the second packet in S402, the first network device also needs to generate the second packet, which specifically includes the following two situations.

Case 1: if the destination address of the first packet is a locally configured binding segment identifier BSID, encapsulating an IPv6 header and a first SRH in an outer layer of the first packet to obtain the second packet, the first SRH includes marking information, and the marking information takes a value of the first value.

Wherein, if the destination address of the first packet is a locally configured BSID, it means that the first packet already includes the BSID, and the first network device needs to additionally encapsulate a layer of IPv6 header and SRH in the outer layer of the first packet. At this time, the marking information in the encapsulated SRH may be set to 1, it indicates that the encapsulation basis of the SRH is the encapsulation by BSID.

As an example, in this case, the first network device may be P3 in FIG. 2 or DC-B in FIG. 3.

Case 2: if a next hop of a routing table entry matched by the first packet is an SRv6 Policy, encapsulating the IPv6 header and the first SRH in the outer layer of the first packet to obtain the second packet, the first SRH includes marking information, and the marking information takes a value of the second value.

After receiving the first packet, the first network matches the first packet with a routing table entry stored by itself. If the next hop of the matched routing table entry is the SRv6 Policy, it means that the first network device is the head node. In this case, the first packet may be a service packet from the CE device.

Furthermore, the first network device encapsulates the first SRH based on the SRv6 Policy, and sets the marking information in the first SRH to 0, it indicates that the first SRH is not obtained through BSID encapsulation.

As an example, in this case, the first network device may be PE1 in FIG. 2 or device A in FIG. 3.

Taking the scenario in FIG. 2 as an example to explain the above two encapsulation cases, as shown in FIG. 7, which is a schematic diagram of the encapsulation of packets by PE1 node and P3 node in FIG. 2. After PE1 receives the Original Packet (Original Packet) sent by device A, it is determined that the original packet matches the SRv6 Policy, and the packet is directed to the SRv6 Policy of PE2. PE1 may add the IPv6 header and SRH encapsulation to the packet according to the segment list (P1.SID, P2.SID, P3.SID, PE2.SID) in the SRv6 Policy, and forward the packet according to the path indicated by the Segment list. Wherein the source address of the IPv6 header is the SID of PE1, and in SRH, BE-FLAG = 0, that is, BE-FLAG is not set, it is indicated that the SRH is not encapsulated by a BSID.

When P3 receives the packet encapsulated by PE1, and recognizes that the destination address in the IPv6 header of the packet is the same as the locally configured BSID, it obtains the Segment list (P5.SID, P4::SF) associated with the locally configured BSID, and encapsulates the packet according to the Segment list, that is, encapsulates the IPv6 header and SRH in the outer layer of the packet. Wherein the source address of the IPv6 header is the SID of P3, in the SRH, BE-FLAG = 1, BE-FLAG is set, it is indicated that the SRH is encapsulated by a BSID.

The above description only takes the forwarding path of the packet passing through two ASs as an example. Actually, the packet may pass through multiple ASs, so the packet includes multiple SRHs and IPv6 headers.

With this method, after receiving the first packet, the first network device sets the marking information taking a value of the first value in the encapsulated SRH in the case that the destination address of the first packet is the locally configured BSID. The first network device sets the label information with the second value in the encapsulated SRH in the case that the next hop of the routing table entry of the first packet is the SRv6 Policy. In this way, the subsequent network device may determine whether the first SRH is encapsulated by a BSID according to the value of the marking information, and then the original packet may be accurately identified from the multi-layer encapsulated packet.

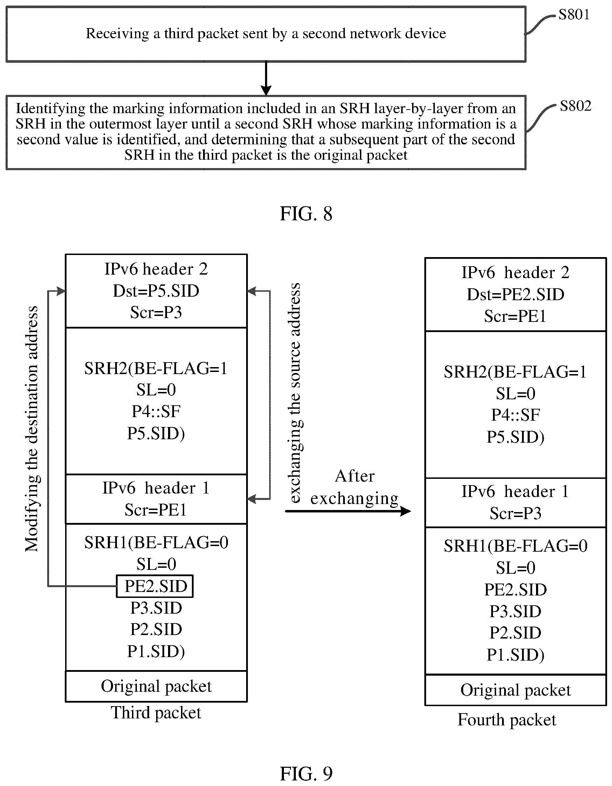

In another example of the present disclosure, the first network device may also be used as an intermediate node on other forwarding paths that needs to identify the original packet, or it may also be a device such as a packet monitoring device that can capture the packet transmitted in the forwarding path. As shown in FIG. 8, the method further includes the following blocks.

At S801, receiving a third packet sent by a second network device.

Wherein, the third packet includes at least one layer of SRH and IPv6 header, and an SRH in each layer includes marking information.

At S802, identifying the marking information included in an SRH layer-by-layer from an SRH in the outermost layer until a second SRH whose marking information is a second value is identified, and determining that a subsequent part of the second SRH in the third packet is the original packet.

In this example of the present disclosure, an SRH in each layer in the third packet includes marking information. When the second SRH is identified, determining that the marking information included in the second SRH takes a value of the second value, and then determining that the second SRH is not encapsulated by a BSID, and the subsequent part of the second SRH is the original packet.

In an implementation, the first network device may identify whether the BE Flag in the SRH is set layer-by-layer from an SRH in the outermost layer of the third packet, until a second SRH including the unset BE Flag is identified, and determining that a subsequent part of the second SRH is the original packet.

For example, taking the rightmost packet in FIG. 7 as an example, firstly identifying that the BE Flag of the outer SRH is 1, then identifying the inner SRH, and if the BE Flag of the inner SRH is 0, determining that the subsequent part of the inner SRH is the original packet.

With this method, the first network device may identify the marking information included in the multiple layers of SRHs of the third packet layer-by-layer. When a second SRH whose marking information is a second value is identified, since the marking information which takes a value of the second value indicates that the second SRH is not encapsulated by a BSID, it can be determined that the subsequent part of the second SRH is the original packet, and the first network device may accurately extract the original packet.

In another example, the first network device may also be connected with the service function node, that is, the first network device may act as SFF. For example, the first network device is P4 in FIG. 2 or DC-leaf in FIG. 3.

In this implementation scenario, in the above S802, identifying the marking information included in an SRH layer-by-layer from the SRH in the outermost layer until a second SRH whose marking information is the second value is identified, after determining that the subsequent part of the second SRH in the third packet is the original packet, it may be implemented in the following manner 1 or manner 2.

Manner 1: if a destination address of an IPv6 header in the outermost layer of the third packet is a locally configured static proxy SID or a dynamic proxy SID, forwarding the original packet to the service function node;

In the example of the present disclosure, if the destination address of the IPv6 header in the outermost layer of the third packet is a locally configured static proxy SID (End.AS SID) or the dynamic proxy SID (End.AD SID), the first network device may delete the SRH and IPv6 layer-by-layer from the SRH in the outermost layer of the third packet until the second SRH and IPv6 headers in the outer layer of the second SRH are deleted to obtain the original packet.

Furthermore, the first network device sends the original packet to the service function node, so that the service function node may normally process the original packet. It can avoid the problem that the first network device cannot identify the original packet, which causes the first network device to fail to forward the correct original packet to the service function node.

Manner 2: if a destination address of an IPv6 header in the outermost layer of the third packet is a locally configured masquerading proxy SID, updating the destination address of the IPv6 header in the outermost layer to an address of a last network device of a forwarding path indicated by the second SRH, to obtain a fourth packet, and forwarding the fourth packet to the service function node.

Wherein, if the destination address of the IPv6 header in the outermost layer of the third packet is a locally configured masquerading proxy SID, it means that the SID of the first network device is End.AM SID, and the first network device needs to update the destination address of the IPv6 header in the outermost layer to the segment with SL=0, which is the final destination address.

It may be understood that the segment with SL=0 in the SRH encapsulated by the BSID is not the final destination address, the final destination address is actually in the SRH encapsulated by the head node, that is, the second SRH mentioned above. Therefore, the first network device updates the destination address of the IPv6 header in the outermost layer to the segment with SL=0 in the second SRH to obtain the fourth packet. In this way, the service function node may correctly forward the fourth packet after processing it.

Optionally, if the service function node needs to match the forwarding policy according to the source address and destination address of the packet, the first network device also needs to update the source address of the IPv6 header in the outermost layer to the actual source address of the forwarding path. That is, before obtaining the fourth packet, the source address of the IPv6 header in the outermost layer of the third packet may be exchanged with the source address included in the IPv6 header in a same layer as the second SRH.

That is to say, updating the destination address of the IPv6 header in the outermost layer of the third packet to the address of the last network device in the forwarding path indicated by the second SRH, and exchanging the source address of the IPv6 header in the outermost layer with the source address included in the IPv6 header in a same layer as the second SRH, to obtain the fourth packet.

Wherein, the IPv6 header in the same layer as the second SRH is the IPv6 header in the outer layer of the second SRH and adjacent to the second SRH.

As shown in FIG. 9, the third packet includes two layers of SRHs and two IPv6 headers as an example for illustration. It is assumed that SRH1 and IPv6 header 1 of the third packet are encapsulated by the PE1 node in FIG. 2, and the source address (Scr) of IPv6 header 1 is PE1. SRH2 and IPv6 header 2 are encapsulated by P3 node in FIG. 2. The source address of the IPv6 header 2 is P3. The last destination address of the forwarding path indicated by SRH1 is PE2.SID, so the destination address (Dst) of IPv6 header 2 needs to be updated to PE2.SID. After the source addresses of IPv6 header 2 and IPv6 header 1 are exchanged, the fourth packet is obtained. The source address of IPv6 header 1 of the fourth packet is P3, and the source address of IPv6 header 2 is PE1.

The above-mentioned IPv6 header 1 is located in the outer layer of SRH1 and adjacent to the SRH1, and the IPv6 header 1 and the SRH1 are in the same layer; IPv6 header 2 is located in the outer layer of SRH2 and adjacent to the SRH2. The IPv6 header 2 and the SRH2 are in the same layer.

When the service function node completes processing the fourth packet, a fifth packet is obtained, and the part other than the original packet in the fifth packet is consistent with the fourth packet. The service node replies the fifth packet to the first network device.

The first network device receives the fifth packet sent by the service function node, and updates the destination address of the IPv6 header in the outermost layer of the fifth packet to the address of the next network device in the forwarding path indicated by the SRH in the outermost layer to obtain a sixth packet; forwarding the sixth packet in the forwarding path indicated by the SRH in the outermost layer.

After the first network device receives the fifth packet, since the destination address of the IPv6 header in the outermost layer of the fifth packet is the same as that of the fourth packet, it is the final destination address, in order to forward the fifth packet to the next device in the forwarding path, the destination address in the IPv6 header in the outermost layer of the fifth packet needs to be changed to the address of the next network device in the forwarding path, so that the packet may continue to be transmitted along the forwarding path.

As shown in FIG. 2, SF returns the processed packet to P4. At this time, the destination address in the IPv6 header in the outermost layer of the packet returned to P4 is still the address of PE2, and P4 needs to change the address in the IPv6 header in the outermost layer to the address of P5, so that the packet is forwarded to P5.

If the service function node needs to match the forwarding policy according to the source address and destination address of the packet, and the first network device exchanges the source address of the third packet, then before the first network device obtains the sixth packet, the source address of the IPv6 header in the outermost layer of the fifth packet needs to be exchanged with the source address included in the IPv6 header in a same layer as the second SRH.

That is, updating the destination address of the IPv6 header in the outermost layer of the fifth packet to the address of the next network device in the forwarding path indicated by the SRH in the outermost layer, and exchanging the source address of the IPv6 header in the outermost layer of the fifth packet with the source address of the IPv6 header in the same layer as the second SRH to obtain the sixth packet.

The manner in which the first network device exchanges the source address of the fifth packet is the same as the manner in which the first network device exchanges the source address of the third packet, which is not repeated here.

In another example of the present disclosure, the third service packet may also be a traceroute packet. After determining that the subsequent part of the second SRH in the third packet is the original packet, the first network device may also send a time to live (TTL) timeout packet to the second network device, and a destination address of the TTL timeout packet is a source address of the IPv6 header in a same layer as the second SRH.

Wherein, the TTL timeout packet is an internet control packet protocol version 6 (ICMPv6) packet. After receiving the traceroute packet, the first network device sends the TTL timeout packet to the second network device if the TTL timeout is determined according to the traceroute packet.

As shown in FIG. 2, PE1 may also send a traceroute packet through the traceroute function, to detect the number of network devices between PE2 and PE1. When the first network device P4 receives the traceroute packet, the outer layer of the traceroute packet is encapsulated with two layers of SRHs and two IPv6 headers by PE1 and P3. P4 needs to set the destination address of TTL timeout packet as the source address of IPv6 header in the same layer as the second SRH of the traceroute packet, namely PE1, and send the TTL timeout packet to PE1.

With this method, sending the TTL timeout packet whose destination address is set to the source address of IPv6 header in the same layer as the second SRH, that is, the real source address of the third packet, to the second network device, so that the TTL timeout packet may be correctly forwarded to the network device initiating a traceroute function detection.

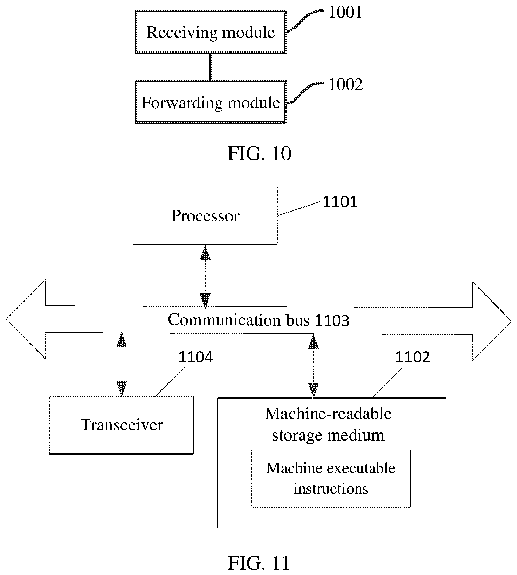

Based on the same inventive concept, the example of the present disclosure also provides a packet processing apparatus, which is applied to the first network device. As shown in FIG. 10, the apparatus includes:
a receiving module 1001 to receive a first packet;
a forwarding module 1002 to forward a second packet, the second packet includes a first segment routing header SRH and the first packet, and the first SRH includes marking information, and the marking information indicates encapsulation basis of the first SRH.

Optionally, the marking information takes a value of a first value or a second value;
when the value of the marking information is the first value, it is indicated that the first SRH is an SRH encapsulated by a BSID;
when the value of the marking information is the second value, it is indicated that the first SRH is not an SRH encapsulated by a BSID.

Optionally, the apparatus further comprises an encapsulation module;
the encapsulation module is to encapsulate an IPv6 header and a first SRH in an outer layer of the first packet to obtain the second packet if the destination address of the first packet is a locally configured binding segment identifier BSID, the first SRH includes marking information, and the marking information takes a value of the first value; or,
the encapsulation module is to encapsulate the IPv6 header and the first SRH in the outer layer of the first packet to obtain the second packet if a next hop of a routing table entry matched by the first packet is an SRv6 Policy, the first SRH includes marking information, and the marking information takes a value of the second value.

Optionally, the first SRH includes a flags field, and 1 bit in the flags field carries the marking information.

Optionally, the apparatus further comprises a determining module;
the receiving module 1001 is further to receive a third packet sent by a second network device, the third packet includes at least one layer of SRH and IPv6 header, and an SRH in each layer includes marking information;
the determining module is to identify the marking information included in an SRH layer-by-layer from the SRH in the outermost layer, until a second SRH whose marking information is a second value is identified, and determine that a subsequent part of the second SRH in the third packet is the original packet.

Optionally, the first network device is connected with a service function node; the forwarding module 1002 is further to:
if a destination address of an IPv6 header in the outermost layer of the third packet is a locally configured static proxy SID or a dynamic proxy SID, forward the original packet to the service function node; or,
if the destination address of the IPv6 header in the outermost layer of the third packet is a locally configured masquerading proxy SID, update the destination address of the IPv6 header in the outermost layer to an address of a last network device of a forwarding path indicated by the second SRH to obtain a fourth packet, and forward the fourth packet to the service function node.

Optionally,
the receiving module 1001 is further to receive a fifth packet sent by the service function node;
the forwarding module 1002 is further to update a destination address of an IPv6 header in the outermost layer of the fifth packet to an address of a next network device in a forwarding path indicated by the SRH in the outermost layer, to obtain a sixth packet;
forward the sixth packet in the forwarding path indicated by the SRH in the outermost layer.

Optionally, the forwarding module 1002 is further to:
exchange a source address of the IPv6 header in the outermost layer of the third packet with a source address included in the IPv6 header in a same layer as the second SRH;
exchange a source address of the IPv6 header in the outermost layer of the fifth packet with a source address included in the IPv6 header in a same layer as the second SRH.

Optionally, the forwarding module 1002 is further to send a lifetime TTL timeout packet to the second network device, a destination address of the TTL timeout packet is a source address of the IPv6 header in a same layer as the second SRH.

The example of the present disclosure also provides a network device, as shown in FIG. 11, which includes:
a processor 1101;
a transceiver 1104;
a machine-readable storage medium 1102 that stores machine executable instructions that can be executed by the processor1101; the machine executable instructions cause the processor1101 to perform the following steps:
   receiving a first packet through the transceiver 1104;
   forwarding a second packet through the transceiver 1104, the second packet comprises a first segment routing header SRH and the first packet, and the first SRH comprises marking information, and the marking information indicates encapsulation basis of the first SRH.

Optionally, the marking information takes a value of a first value or a second value;
when the value of the marking information is the first value, it is indicated that the first SRH is an SRH encapsulated by a BSID;
when the value of the marking information is the second value, it is indicated that the first SRH is not an SRH encapsulated by a BSID.

Optionally, the machine executable instructions further cause the processor 1101 to perform the following steps:
if a destination address of the first packet is a locally configured binding segment identifier BSID, encapsulating an IPv6 header and a first SRH in an outer layer of the first packet to obtain the second packet, the first SRH includes marking information, and the marking information takes a value of the first value; or,
if a next hop of a routing table entry matched by the first packet is an SRv6 Policy, encapsulating the IPv6 header and the first SRH in the outer layer of the first packet to obtain the second packet, wherein the first SRH includes marking information, and the marking information takes a value of the second value.

Optionally, the first SRH includes a flags field, and 1 bit in the flags field carries marking information.

Optionally, the machine executable instructions further cause the processor 1101 to perform the following steps:
receiving a third packet sent by a second network device through the transceiver 1104, the third packet includes at least one layer of SRH and IPv6 header, and an SRH in each layer includes marking information;
identifying the marking information included in an SRH layer-by-layer from the SRH in the outermost layer until a second SRH whose marking information is a second value is identified, and determining that a subsequent part of the second SRH in the third packet is the original packet.

Optionally, the machine executable instructions further cause the processor to perform the following steps:
if the destination address of the IPv6 header in the outermost layer of the third packet is a locally configured static proxy SID or a dynamic proxy SID, forwarding the original packet to the service function node through the transceiver1104; or,
if the destination address of the IPv6 header in the outermost layer of the third packet is a locally configured masquerading proxy SID, updating the destination address of the IPv6 header in the outermost layer to an address of a last network device of a forwarding path indicated by the second SRH to obtain a fourth packet, and forwarding the fourth packet to the service function node through the transceiver 1104.

Optionally, the machine executable instructions further cause the processor 1101 to perform the following steps:
receiving a fifth packet sent by the service function node through the transceiver 1104;
updating a destination address of an IPv6 header in the outermost layer of the fifth packet to an address of a next network device in a forwarding path indicated by the SRH in the outermost layer, to obtain a sixth packet;
forwarding the sixth packet in the forwarding path indicated by the SRH in the outermost layer through the transceiver1104.

Optionally, the machine executable instructions further cause the processor 1101 to perform the following steps:
exchanging a source address of the IPv6 header in the outermost layer of the third packet with a source address included in the IPv6 header in a same layer as the second SRH;
exchanging a source address of the IPv6 header in the outermost layer of the fifth packet with a source address included in the IPv6 header in a same layer as the second SRH.

Optionally, the third packet is a traceroute packet; the machine executable instructions further cause the processor 1101 to perform the following steps:
sending a lifetime TTL timeout packet to the second network device through the transceiver 1104, a destination address of the TTL timeout packet is a source address of the IPv6 header in a same layer as the second SRH.

As shown in FIG. 11, the network device may also include a communication bus 1103. The processor 1101, the machine-readable storage medium 1102 and the transceiver 1104 communicate with each other through the communication bus 1103, which may be a peripheral component interconnect (PCI) bus or an extended industry standard architecture (EISA) bus, etc. The communication bus 1103 may be divided into address bus, data bus, control bus, etc.

The transceiver 1104 may be a wireless communication module, and under the control of the processor 1101, the transceiver 1104 performs data interaction with other devices.

The machine-readable storage medium 1102 may include a random access memory (RAM) or a non-volatile memory (NVM), such as at least one disk memory. In addition, the machine-readable storage medium 1102 may also be at least one storage apparatus located remotely from the aforementioned processor.

The processor 1101 may be a general-purpose processor, including a central processing unit (CPU), a network processor (NP), etc., it may also be a digital signal processing (DSP), an application specific integrated circuit (ASIC), a field-programmable gate array (FPGA) or other programmable logic devices, discrete gate or transistor logic devices, and discrete hardware components.

Based on the same inventive concept, according to the packet processing method provided by the above examples of the present disclosure, the examples of the present disclosure further provide a machine-readable storage medium, which stores machine executable instructions that may be executed by a processor. The processor is caused by the machine executable instructions to implement the steps of any of the above packet processing methods.

In yet another example provided by the present disclosure, there is also provided a computer program product containing instructions, which, when running on a computer, causes the computer to execute the steps of any of the packet processing methods in the above examples.

It should be noted that the relationship terms herein such as "first", "second", and the like are only used to distinguish one entity or operation from another entity or operation, and do not necessarily require or imply that there is any actual relationship or order between these entities or operations. Moreover, the terms "include", "comprise" or any other variants thereof are intended to cover a non-exclusive inclusion, so that processes, methods, articles, or devices including a series of elements include not only those elements listed but also those not specifically listed or elements intrinsic to these processes, methods, articles, or equipment. Without further limitations, elements defined by the sentences "include(s) a." do not exclude that there are other identical elements in the processes, methods, articles or devices which include the said element.

The description is made only for preferred examples of the present disclosure, which are not intended to limit the present disclosure. Any modifications, equivalent replacements, improvements, etc. which are made within the spirit and principles of the present disclosure, will fall into the protection scope of the present disclosure.

## Claims

1. A packet processing method, which is applied to a first network device and comprises:
receiving a first packet;
forwarding a second packet, the second packet comprises a first segment routing header SRH and the first packet, and the first SRH comprises marking information, and the marking information indicates encapsulation basis of the first SRH.

2. The method of claim 1, wherein the marking information takes a value of a first value or a second value;
when the value of the marking information is the first value, it is indicated that the first SRH is an SRH encapsulated by a BSID;
when the value of the marking information is the second value, it is indicated that the first SRH is not an SRH encapsulated by a BSID.

3. The method of claim 2, wherein before forwarding the second packet, the method further comprises:
if a destination address of the first packet is a locally configured binding segment identifier BSID, encapsulating an IPv6 header and a first SRH in an outer layer of the first packet to obtain the second packet, the first SRH comprises marking information, and the marking information takes a value of the first value; or,
if a next hop of a routing table entry matched by the first packet is an SRv6 Policy, encapsulating the IPv6 header and the first SRH in the outer layer of the first packet to obtain the second packet, the first SRH comprises marking information, and the marking information takes a value of the second value.

4. The method of any one of claims 1-3, wherein the first SRH comprises a flags field, and 1 bit in the flags field carries the marking information.

5. The method of claim 1, wherein the method further comprises:
receiving a third packet sent by a second network device, the third packet comprises at least one layer of SRH and IPv6 header, and an SRH in each layer comprises marking information;
identifying marking information comprised in an SRH layer-by-layer from an SRH in the outermost layer until a second SRH whose marking information is a second value is identified, and determining that a subsequent part of the second SRH in the third packet is an original packet.

6. The method of claim 5, wherein the first network device is connected with a service function node; after determining that the subsequent part of the second SRH in the third packet is the original packet, the method further comprises:
if a destination address of an IPv6 header in the outermost layer of the third packet is a locally configured static proxy SID or a dynamic proxy SID, forwarding the original packet to the service function node; or,
if the destination address of the IPv6 header in the outermost layer of the third packet is a locally configured masquerading proxy SID, updating the destination address of the IPv6 header in the outermost layer to an address of a last network device of a forwarding path indicated by the second SRH to obtain a fourth packet, and forwarding the fourth packet to the service function node.

7. The method of claim 6, wherein after forwarding the fourth packet to the service function node, the method further comprises:
receiving a fifth packet sent by the service function node;
updating a destination address of an IPv6 header in the outermost layer of the fifth packet to an address of a next network device in a forwarding path indicated by the SRH in the outermost layer, to obtain a sixth packet;
forwarding the sixth packet in the forwarding path indicated by the SRH in the outermost layer.

8. The method of claim 7, wherein,
before obtaining the fourth packet, the method further comprises:
exchanging a source address of the IPv6 header in the outermost layer of the third packet with a source address included in the IPv6 header in a same layer as the second SRH;
before obtaining the sixth packet, the method further comprises:
exchanging a source address of the IPv6 header in the outermost layer of the fifth packet with a source address included in the IPv6 header in a same layer as the second SRH.

9. The method of claim 5, wherein the third packet is a traceroute packet; after determining that the subsequent part of the second SRH in the third packet is the original packet, the method further comprises:
sending a lifetime TTL timeout packet to the second network device, a destination address of the TTL timeout packet is a source address of the IPv6 header in a same layer as the second SRH.

10. A packet processing apparatus, which is applied to a first network device, and the apparatus comprises:
a receiving module to receive a first packet;
a forwarding module to forward a second packet, the second packet comprises a first segment routing header SRH and the first packet, and the first SRH comprises marking information, and the marking information indicates encapsulation basis of the first SRH.

11. The apparatus of claim 10, wherein the marking information takes a value of a first value or a second value;
when the value of the marking information is the first value, it is indicated that the first SRH is an SRH encapsulated by a BSID;
when the value of the marking information is the second value, it is indicated that the first SRH is not an SRH encapsulated by a BSID.

12. The apparatus of claim 11, wherein the apparatus further comprises: an encapsulation module;
the encapsulation module is to encapsulate an IPv6 header and a first SRH in an outer layer of the first packet to obtain the second packet if a destination address of the first packet is a locally configured binding segment identifier BSID, the first SRH comprises marking information, and the marking information takes a value of the first value; or,
the encapsulation module is to encapsulate the IPv6 header and the first SRH in the outer layer of the first packet to obtain the second packet if a next hop of a routing table entry matched by the first packet is an SRv6 Policy, the first SRH comprises marking information, and the marking information takes a value of the second value.

13. The apparatus of any one of claims 10-12, wherein the first SRH comprises a flags field, and 1 bit in the flags field carries the marking information.

14. The apparatus of claim 10, wherein the apparatus further comprises a determining module;
the receiving module is further to receive a third packet sent by a second network device, the third packet comprises at least one layer of SRH and IPv6 header, and an SRH in each layer comprises marking information;
the determining module is to identify the marking information included in an SRH layer-by-layer from an SRH in the outermost layer until a second SRH whose marking information is a second value is identified, and determine that a subsequent part of the second SRH in the third packet is an original packet.

15. The apparatus of claim 14, wherein the first network device is connected with a service function node; the forwarding module is further to:
if a destination address of an IPv6 header in the outermost layer of the third packet is a locally configured static proxy SID or a dynamic proxy SID, forward the original packet to the service function node; or,
if the destination address of the IPv6 header in the outermost layer of the third packet is a locally configured masquerading proxy SID, update the destination address of the IPv6 header in the outermost layer to an address of a last network device of a forwarding path indicated by the second SRH to obtain a fourth packet, and forward the fourth packet to the service function node.

16. The apparatus of claim 15, wherein,
the receiving module is further to receive a fifth packet sent by the service function node;
the forwarding module is further to:
update a destination address of an IPv6 header in the outermost layer of the fifth packet to an address of a next network device in a forwarding path indicated by the SRH in the outermost layer, to obtain a sixth packet;
forward the sixth packet in the forwarding path indicated by the SRH in the outermost layer.

17. The apparatus of claim 16, wherein the forwarding module is further to:
exchange a source address of the IPv6 header in the outermost layer of the third packet with a source address included in the IPv6 header in a same layer as the second SRH;
exchange a source address of the IPv6 header in the outermost layer of the fifth packet with a source address included in the IPv6 header in a same layer as the second SRH.

18. The apparatus of claim 14, wherein,
the forwarding module is further to send a lifetime TTL timeout packet to the second network device, a destination address of the TTL timeout packet is a source address of the IPv6 header in a same layer as the second SRH.

19. A network device, wherein the network device comprises:
a processor;
a transceiver;
a machine-readable storage medium storing machine executable instructions that can be executed by the processor; the machine executable instructions cause the processor to perform the following steps:
receiving a first packet through the transceiver;
forwarding a second packet through the transceiver, the second packet comprises a first segment routing header SRH and the first packet, and the first SRH comprises marking information, and the marking information indicates encapsulation basis of the first SRH.

20. The network device of claim 19, wherein the marking information takes a value of a first value or a second value;
when the value of the marking information is the first value, it is indicated that the first SRH is an SRH encapsulated by a BSID;
when the value of the marking information is the second value, it is indicated that the first SRH is not an SRH encapsulated by a BSID.

21. The network device of claim 20, wherein the machine executable instructions further cause the processor to perform the following steps:
if a destination address of the first packet is a locally configured binding segment identifier BSID, encapsulating an IPv6 header and a first SRH in an outer layer of the first packet to obtain the second packet, the first SRH comprises marking information, and the marking information takes a value of the first value; or,
if a next hop of a routing table entry matched by the first packet is an SRv6 Policy, encapsulating the IPv6 header and the first SRH in the outer layer of the first packet to obtain the second packet, the first SRH comprises marking information, and the marking information takes a value of the second value.

22. The network device of any one of claims 19-21, wherein the first SRH comprises a flags field, and 1 bit in the flags field carries the marking information.

23. The network device of claim 19, wherein the machine executable instructions further cause the processor to perform the following steps:
receiving a third packet sent by a second network device through the transceiver, the third packet comprises at least one layer of SRH and IPv6 header, and an SRH in each layer comprises marking information;
identifying the marking information included in an SRH layer-by-layer from an SRH in the outermost layer until a second SRH whose marking information is a second value is identified, and determining that a subsequent part of the second SRH in the third packet is an original packet.

24. The network device of claim 23, wherein the machine executable instructions further cause the processor to perform the following steps:
if a destination address of an IPv6 header in the outermost layer of the third packet is a locally configured static proxy SID or a dynamic proxy SID, forwarding the original packet to the service function node through the transceiver; or,
if the destination address of the IPv6 header in the outermost layer of the third packet is a locally configured masquerading proxy SID, updating the destination address of the IPv6 header in the outermost layer to an address of a last network device of a forwarding path indicated by the second SRH to obtain a fourth packet, and forwarding the fourth packet to the service function node through the transceiver.

25. The network device of claim 24, wherein the machine executable instructions further cause the processor to perform the following steps:
receiving a fifth packet sent by the service function node through the transceiver;
updating a destination address of an IPv6 header in the outermost layer of the fifth packet to an address of a next network device in a forwarding path indicated by the SRH in the outermost layer, to obtain a sixth packet;
forwarding the sixth packet in the forwarding path indicated by the SRH in the outermost layer through the transceiver.

26. The network device of claim 25, wherein the machine executable instructions further cause the processor to perform the following steps:
exchanging a source address of the IPv6 header in the outermost layer of the third packet with a source address included in the IPv6 header in a same layer as the second SRH;
exchanging a source address of the IPv6 header in the outermost layer of the fifth packet with a source address included in the IPv6 header in a same layer as the second SRH.

27. The network device of claim 23, wherein the third packet is a traceroute packet; the machine executable instructions further cause the processor to perform the following steps:
sending a lifetime TTL timeout packet to the second network device through the transceiver, a destination address of the TTL timeout packet is a source address of the IPv6 header in a same layer as the second SRH.

28. A machine-readable storage medium storing machine executable instructions that, when invoked and executed by a processor, cause the processor to implement the method of any one of claims 1-9.

29. A computer program product, which causes a processor to implement the method of any one of claims 1-9.
